(19) Europäisches Patentamt
European Patent Office
Office européen des brevets

(11) **EP 4 403 375 B1**

(12) **EUROPÄISCHE PATENTSCHRIFT**

(45) Veröffentlichungstag und Bekanntmachung des Hinweises auf die Patenterteilung:
**22.04.2026 Patentblatt 2026/17**

(21) Anmeldenummer: **23211742.4**

(22) Anmeldetag: **23.11.2023**

(51) Internationale Patentklassifikation (IPC):
**B60B 1/00** *(2006.01)* **B60B 1/02** *(2006.01)*
**B60B 21/02** *(2006.01)*

(52) Gemeinsame Patentklassifikation (CPC):
**B60B 1/003; B60B 1/02; B60B 21/025;**
B60B 2320/00; B60B 2360/10; B60Y 2200/13

(54) **FAHRRADFELGE**

BICYCLE RIM

JANTE DE BICYCLETTE

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorität: **17.01.2023 DE 102023101002**

(43) Veröffentlichungstag der Anmeldung:
**24.07.2024 Patentblatt 2024/30**

(73) Patentinhaber: **Lau, Daniel**
**6850 Dornbirn (AT)**

(72) Erfinder: **Lau, Daniel**
**6850 Dornbirn (AT)**

(74) Vertreter: **Vossius & Partner**
**Patentanwälte Rechtsanwälte mbB**
**Siebertstrasse 3**
**81675 München (DE)**

(56) Entgegenhaltungen:
**WO-A1-2020/112115 WO-A1-93/09963
DE-A1- 4 208 917 US-A1- 2008 277 996**

**Beschreibung**

Die vorliegende Erfindung betrifft eine Fahrradfelge für ein Drahtspeichenlaufrad mit Felgenflanken, wobei diese als Hohlprofil ausgeführt ist und aus einer Metalllegierung besteht.

Als Material für die Fahrradfelge eines Drahtspeichenlaufrades sind bereits die unterschiedlichsten Materialien vorgeschlagen worden. Technisch durchgesetzt haben sich jedoch lediglich Aluminiumfelgen (vgl. z.B. DE 10 2007 033 719 A1, DE 695 08 041 T2 und US 2016/0144660 A1), die aus einem extrudierten Hohlprofil gebogen werden und carbonfaserverstärkte Felgen (vgl. z.B. DE 20 2020 104 486 U1, DE 10 2015 102 465 B4 und DE 10 2008 020 257 A1), die entweder mittels eines oder mehrerer sogenannter Prepregschläuche oder Geflechtschläuche hohl geformt werden. Ferner sind Verbundfelgen bspw. aus DE 10 2009 012 999 A1, DE 10 217 115 246 B4 und DE 10 2010 034 500 A1 bekannt. DE 42 08 917 A1 offenbart eine Hohlkammerfelge für ein Speichenrad, US 2008/277996 A1 ein Verfahren zur Herstellung einer Felge.

Ein Hohlprofil für Fahrradfelgen verfügt über ein Felgenbett, Felgenflanken, Seitenwände, Felgenboden und die Felgenschulter. Felgen mit Felgenflanken schließen sowohl Flanken ohne Haken als auch Flanken mit Haken ein.

Abgesehen von den großen Unterschieden hinsichtlich der Materialkosten von Aluminium- und Carbonfelgen können letztere wesentlich leichter und/oder stabiler hergestellt werden und erfreuen sich immer größerer Beliebtheit. Dies beruht hauptsächlich auf den wesentlich größeren spezifischen Festigkeiten und spezifischen Steifigkeiten gepaart mit den an die Belastungsrichtung angepassten Faserrichtungen, den lokal stark unterschiedlichen Wandstärken sowie großvolumigen Felgenquerschnitten, die für ein Leichtbauprodukt erforderlich sind.

Im Leichtbau unterscheidet man prinzipiell zwischen formlichem und stofflichem Leichtbau. Der formliche Leichtbau zielt darauf ab die Geometrie hinsichtlich der Steifigkeiten zu optimieren. Beim stofflichen Leichtbau wird das herkömmliche Material durch eines mit größerer spezifischer Festigkeit und/oder spezifischer Steifigkeit ersetzt. Im Idealfall werden beide Ansätze kombiniert, um den größtmöglichen Effekt zu erzielen.

Die vorliegende Erfindung betrifft Felgen gemäß den unabhängigen Ansprüchen. Bevorzugte Ausführungsformen der erfindungsgemäßen Felgen sind unter anderem in den abhängigen Ansprüchen beschrieben.

Die weitere Beschreibung nimmt Bezug auf die Figuren, welche zeigen:

Fig. 1    eine Querschnittsansicht einer herkömmlichen Felge;

Fig. 2    eine schematische Querschnittsansicht zur Berechnung des axialen Flächenträgheitsmomentes;

Fig. 3    eine Querschnittsansicht einer herkömmlichen extrudierten Aluminiumfelge;

Fig. 4    eine perspektivische Darstellung einer herkömmlichen Felge, die am Felgenboden überfräst ist;

Fig. 5    ein Foto der Außenansicht eines mittels LPBF gedruckten Felgensegments aus einer Aluminiumlegierung gemäß einer bevorzugten Ausführungsform der Erfindung;

Fig. 6    ein Foto der Innenansicht des Felgensegments gemäß Fig. 5;

Fig. 7    eine perspektivische Darstellung eines Abschnitts des Segmentes gemäß Fig. 5 und Fig. 6; und

Fig. 8    eine schematische Querschnittsansicht zur Berechnung des erfindungsgemäßen Leichtbaufaktors (LBF).

In der technischen Mechanik unterscheidet man zwischen Dehnsteifigkeit, Schubsteifigkeit, Biegesteifigkeit, Torsionssteifigkeit und Federsteifigkeit. Für Felgen relevant sind in erster Linie die Biegesteifigkeit sowie die Torsionssteifigkeit, die für homogene Querschnitte (=konstanter Elastizitätsmodul) wie folgt definiert sind:

$$S_b = E * I \qquad\qquad S_t = G * I_t$$

Die Biegesteifigkeit $S_b$ ist durch das Produkt aus Elastizitätsmodul E und axialem Flächenträgheitsmoment I definiert. Die Torsionssteifigkeit $S_t$ ist analog dazu durch das Produkt aus Schubmodul G und Torsionsträgheitsmoment $I_t$ definiert.

Elastizitätsmodul sowie Schubmodul sind Materialeigenschaften und können dem stofflichen Leichtbau zugeordnet werden. Im Gegensatz dazu sind axiales Flächenträgheitsmoment und Torsionsträgheitsmoment geometrische Eigenschafen und können somit dem formlichen Leichtbau zugeordnet werden.

Elastizitätsmodul und Schubmodul sind durch ihre Formelzeichen definiert, die erwähnten Trägheitsmomente werden durch die Geometrie des Querschnitts definiert. Axiale Flächenträgheitsmomente können relativ einfach ermittelt werden, Torsionsträgheitsmomente nicht. Für geschlossene dünnwandige Hohlprofile, die grundlegend den Felgenquerschnitten entsprechen, gilt: Je größer die umschlossene Fläche ist, desto größer ist das Torsionsträgheitsmoment.

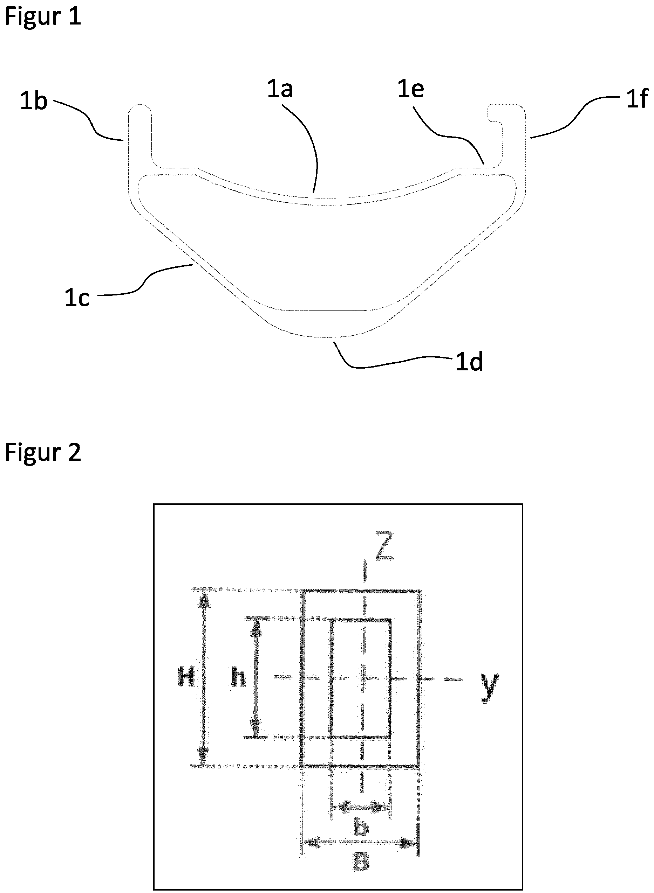

Vereinfacht dargestellt handelt es sich bei Felgenquerschnitten um quadratische bis rechteckige Hohlprofile (vgl. Fig. 2), deren axiale Flächenträgheitsmomente wie folgt definiert sind, wobei die Definition der Größen B, H b und h Fig. 2 zu entnehmen ist:

$$I_y = \frac{1}{12} \cdot (B \cdot H^3 - b \cdot h^3) \qquad I_z = \frac{1}{12} \cdot (B^3 \cdot H - b^3 \cdot h)$$

Abhängig von der Achse, um die der Querschnitt gebogen wird, ergeben sich die jeweiligen axialen Flächenträgheitsmomente. Man beachte dabei, dass die Höhe H und Breite B richtungsabhängig linear oder kubisch in die Berechnung des axialen Flächenträgheitsmoments einfließen.

Tabelle 1 veranschaulicht, wie die geometrischen Eigenschaften und die Materialeigenschaften die Biegesteifigkeit und Masse verschiedener hypothetischer Hohlprofile beeinflussen, wenn vom rechteckigen Hohlprofil (Figur 2) ausgegangen wird.

Alle dargestellten Variationen besitzen eine konstante Baubreite. Die Wandstärke t für die einzelnen Varianten ist gleichmäßig über den Querschnitt verteilt und somit ist h = H - 2*t und b = B - 2*t.

- Nr. 1 bis 3 zeigen, dass sich die Biegesteifigkeit durch Vergrößerung der Bauhöhe um 50% (von 20 auf 30 mm) um den Faktor 2,53 vergrößert, die Masse (Metergewicht) im Vergleich um ca. 20%.
- Nr. 4 bis 6 zeigen, dass mit größerer Bauhöhe und kleineren Wandstärken die gleichen Biegesteifigkeiten wie bei Nr. 1 bis 3 erreicht werden, allerdings bei erheblich reduzierter Masse (Metergewicht).
- Nr. 7 und 8 zeigen, dass eine Vergrößerung des E-Modul um 50% (von 70 auf 105 GPa bei Nr. 8) bei weitem nicht denselben Effekt erzielt, als wenn die Bauhöhe um 50% erhöht werden würde (Vergleich Nr. 5 vs. Nr. 8).
- Nr. 9-14 zeigen, dass mit quasi-isotropem Carbon wesentlich leichtere Querschnitte mit denselben Biegesteifigkeiten hergestellt werden können, ohne die Wandstärken auf extreme Minima reduzieren zu müssen.
- Nr. 15-17 zeigen, dass Aluminium-, Magnesium- und Titanlegierungen annähernd dieselbe Biegesteifigkeit und Masse bei identischer Bauhöhe mit entsprechender Anpassung der Wandstärke erreichen. Dies beruht auf der annähernd gleichen spezifischen Steifigkeit dieser Legierungen.
- Nr. 18-20 zeigen, dass spezifisch hochsteife Materialien wie Metall-Matrix-Composites (MMC's) in Kombination mit entsprechend kleiner Wandstärke und großer Bauhöhe sehr nahe an quasi-isotropem Carbon liegen können (Vergleich Nr. 12-14 vs. Nr. 18-20).

Theoretisch ist es demnach möglich, Felgen mit ähnlichem Verhältnis von Biegesteifigkeit / Masse mittels Legierungen auf Basis von Aluminium, Magnesium, Titan und sogar Eisen herzustellen, wenn die Wandstärken entsprechend gering und die Bauhöhen entsprechend groß sind.

Am Fahrradmarkt existiert jedoch keine Felge, die diesen Ansatz umsetzt und in ähnliche Regionen vordringt. Dies scheint folgende Gründe zu haben:

- Das Extrudieren von dünnwandigen Hohlprofilen mit Legierungen ausreichend hoher Festigkeit ist schwierig. Legierungen wie 6069 oder 6013B können mit minimal ca. 0,70 mm extrudiert werden. Festere Legierungen auf 7xxx Basis sind noch schwieriger zu extrudieren.
- Je größer der Felgenquerschnitt ist, desto schwieriger ist es, eine kleine Wandstärke zu extrudieren.
- Das erforderliche Rundbiegen des Querschnitts in Felgenform verlangt eine gewisse Mindestwandstärke, um ein Knicken und Beulen zu verhindern. In der Regel sind das ca. 0,80 mm.
- Ein hoher dünnwandiger Querschnitt ist biegesteif, aber anfällig für Knicken bzw. Beulen. Genau diese Kombination wäre jedoch erforderlich.
- Hochfeste 7xxx oder hochsteife MMC Legierungen haben nicht das erforderliche Formänderungsvermögen, um gut in Form gebogen werden zu können, und tendieren stark zu einem "Rückfedern" aufgrund der selbst im weichen Zustand höheren Streckgrenze im Vergleich zu 6xxx Legierungen.
- Magnesiumlegierungen sind aufgrund der niedrigeren Dichte nicht durch die Wandstärke (Extrusion und Beulen) limitiert. Allerdings ist das Formänderungsvermögen bei Raumtemperatur durch die hexagonale Gitterstruktur stark limitiert. Zusätzlich führt die hohe Streckgrenze zu großer Rückfederung.

Aktuell beste Felgen auf Aluminiumbasis werden aus 6069 oder 6013B hergestellt und werden mit ca. 0,80 mm Wandstärke extrudiert. Dies ist der Grund, warum in Tabelle 1 eine Wandstärke von 0,80 mm für Nr. 1-3 verwendet wurde.

Das ideale Material für den Prozess des Extrudierens und Biegens hätte folgende Anforderungen:

- Kann dünnwandig extrudiert werden
- Besitzt eine kleine Dichte
- Besitzt hohes Formänderungsvermögen und eine kleine Streckgrenze in Zustand O oder T4
- Kann durch Wärmebehandlung wie z.B. T6 hohe Endfestigkeit erzielen

Bisher wurde hauptsächlich die Biegesteifigkeit betrachtet, die wie dargestellt stark durch die Geometrie beeinflusst werden kann. Ebenso wichtig ist die Festigkeit, die durch das Material bestimmt wird. Die Biegespannung wird durch folgende Formel ermittelt, wobei My das Biegemoment (die Last) um die y-Achse ist, ly das axiale Flächenträgheitsmoment um die y-Achse ist und z der Abstand vom Schwerpunkt in y-Richtung.

$$\sigma(x, z) = \frac{M_y(x)}{I_y} \cdot z$$

Im besten Fall liegen die Streckgrenzen von 6069-T6 bei ca. 350 MPa und 6013B-T6 bei ca. 380 MPa. Literaturwerte von ca. 400 MPa werden in der Realität üblicherweise nicht erreicht.

Tabelle 2 veranschaulicht, wie sich bei gleicher Biegesteifigkeit die maximale Biegespannung nach obiger Formel für einen hohlen Rechteckquerschnitt (Figur 2) mit kleineren Wandstärken und geringerer Masse vergrößert. Das Biegemoment My beträgt 200.000 Nmm.

Nr. 1-3 zeigen, dass die maximale Biegespannung (Randfaserspannung) mit zunehmender Biegesteifigkeit sinkt. Für größere Biegesteifigkeit und gleichen Elastizitätsmodul kann prinzipiell ein weniger festes Material verwendet werden. Die Masse nimmt natürlich bei konstanter Wandstärke und größerer Bauhöhe zu.

Nr. 4-6 vs. Nr. 1-3 zeigen, dass die maximale Biegespannung (Randfaserspannung) größer wird, wenn dieselbe Biegesteifigkeit durch größere Bauhöhe, geringere Wandstärken und folglich kleinere Masse erreicht wird.

Nr. 18-20 zeigen, dass spezifisch hochsteife Materialien ebenfalls sehr hohe Festigkeiten erfordern, speziell wenn geringe Bauhöhen verwendet werden.

Bei Fahrradfelgen für Drahtspeichenlaufräder werden die Lasten über die Speichen sehr lokal in die Felge eingeleitet. Die oben betrachtete Biegespannung berücksichtigt diese Tatsache nicht, da sie über ein Biegemoment verursacht wird und keine lokale Lasteinleitung zu Grunde liegt.

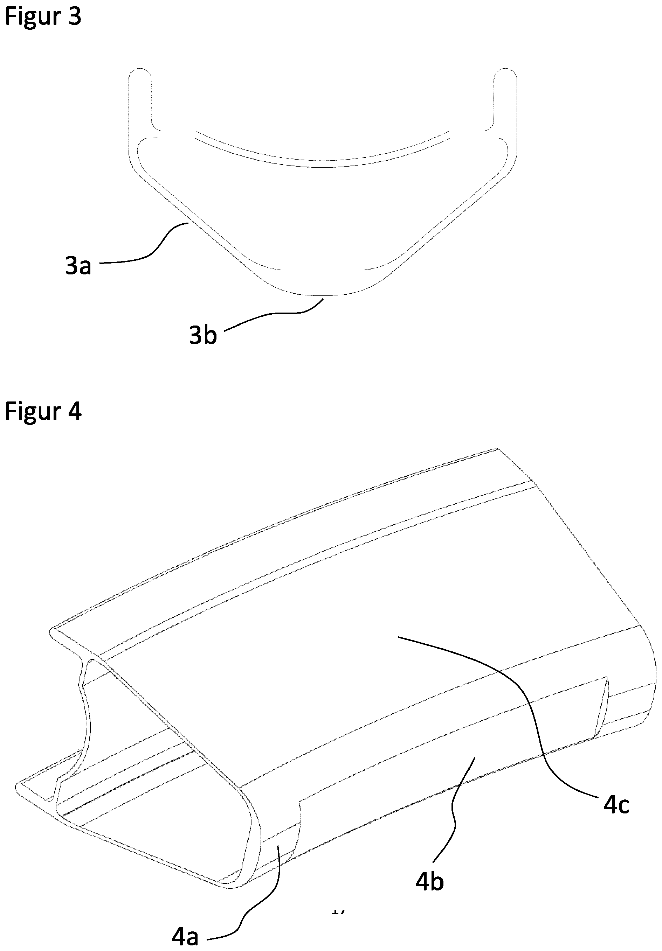

Extrudierte und gebogene Aluminiumfelgen verfügen über einen konstanten Querschnitt (Figur 3) mit mindestens ca. 0,80 mm an den Seitenwänden 3a. Mit 6069-T6 mit ca. 350 MPa Streckgrenze sind die Seitenwände dauerfest. Die Speichen-Bohrungen können an einer beliebigen Stelle des Felgenbodens 3b angebracht sein, da der Querschnitt konstant ist und überall dieselbe Festigkeit aufweist. Bei identer Biegesteifigkeit (Nr. 1 vs. 4) und einer minimalen Wandstärke von 0,47mm vs. 0,80mm müsste die Streckgrenze bei ca. 596 MPa liegen, um dieselbe Festigkeit in der Seitenwänden zu erreichen.

Aluminiumlegierungen mit diesen Festigkeiten existieren und dieser Ansatz ist somit prinzipiell möglich.

Ein optimalerer Ansatz, der es erlaubt auch mit weniger festen Materialien auszukommen, besteht darin, die Wandstärke nur partiell im Bereich der Speichen, wo die größten Lasten vorherrschen, zu vergrößern. Dies ist jedoch nur möglich, wenn die Fertigungstechnologie diese Möglichkeit bereitstellt. Bei CarbonFelgen ist das Anbringen von lokalen Verstärkungslagen Stand der Technik, bei Aluminiumfelgen ist dies so nicht möglich.

Es gibt Aluminiumfelgen (Figur 4), die am dickwandigen Felgenboden 4a zwischen den Speichen-Bohrungen 4b überfräst sind und somit lokal weniger Wandstärke am Felgenboden besitzen. An den Seitenwänden 4c, wo der Effekt auf die Reduzierung der Masse, durch die wesentlich größere Fläche, viel größer ist, gibt es diesen Zugang nicht. Grund ist, dass die erforderlichen hochfesten Legierungen nicht entsprechend dünnwandig extrudiert und/oder gebogen werden können. Ein nachträgliches komplettes Überfräsen der Seitenwände würde sich ebenfalls als sehr schwierig herausstellen, da jede einzelne Felge nach dem Biegen im Zehntelmillimeterbereich voneinander abweicht. Wenn nur Zehntelmillimeter weggefräst werden sollen, ist das nicht möglich oder nur, wenn jede einzelne Felge dreidimensional vermessen werden würde und individuell gefräst. Da die hochfesten Legierungen ohnehin nicht "biegbar" sind, erübrigt sich dieser Ansatz.

Felgen aus extrudierten und rundgebogenen Hohlprofilen aus Aluminium- und Magnesiumlegierungen können, wie zuvor ausgeführt, nicht in den erforderlichen dünnen Wandstärken hergestellt werden. Folglich sind diese hinsichtlich Leichtbau durch den Fertigungsprozess und die möglichen Legierungen limitiert.

Es ist eine Aufgabe der vorliegenden Erfindung die oben genannten Probleme im Stand der Technik zu adressieren und diesbezüglich verbesserte Felgen bereitzustellen. Diese Aufgabe wird durch die Felgen gemäß den unabhängigen Ansprüchen gelöst. Die abhängigen Ansprüche beziehen sich auf bevorzugte Ausführungsformen der Erfindung.

Der Erfinder der vorliegenden Anmeldung hat in umfangreichen Tests einen Leichtbaufaktor (LBF, Def. s.u.) definiert und ermittelt, um diesen Unterschied zwischen Felgen aus Aluminiumlegierungen und Carbon quantifizierbar machen zu können. Dieser soll neben dem offensichtlichen Parameter der Masse, auch die Steifigkeiten sowie die Festigkeiten der Felge abbilden können. Zusätzlich ist der LBF einfach zu ermitteln.

Erfindungsgemäß wird der einheitenlose Leichtbaufaktor (LBF) wie folgt definiert:

$$LBF = (D \times H^3 \times B^{1,5}) / ((M^4 \times S^{1,5})/100.000)$$

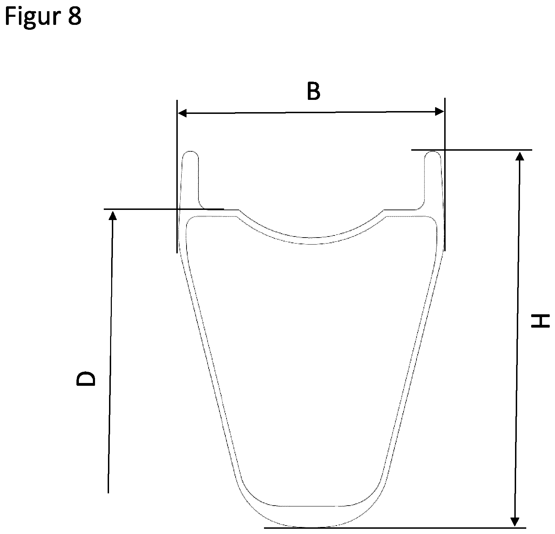

Die Parameter sind nachfolgend beschrieben und in Figur 8 erläutert:

- Felgenhöhe H in mm
- Äußere Felgenbreite B in mm
- Nenn - bzw. Schulterdurchmesser D in mm
- Masse M in Gramm
- Anzahl der Speichen S

Die Masse kann einfach über eine Waage ermittelt werden. Radiale und laterale Biegesteifigkeit sind wie zuvor ausführlich dargestellt überwiegend von der Felgenhöhe sowie Felgenbreite abhängig. Diese Parameter können ebenfalls einfach mittels einer Schiebelehre ermittelt werden. Festigkeiten sind eng mit den Wandstärken verbunden und können nicht ohne eine Zerstörung der Felge ermittelt werden. Eine Felge mit großen Abmessungen (Höhe und Breite) in Kombination mit geringer Masse verfügt automatisch über kleine Wandstärken und muss folglich ein festes Material verwenden. Die Festigkeit ist also über diese Parameter indirekt abgebildet. Zusätzlich muss die Anzahl der Speichen berücksichtigt werden, da diese sowohl zur radialen wie auch lateralen Steifigkeit beitragen. Die Anzahl der Felgenbohrungen können einfach gezählt werden. So kann eine Felge mit kleiner radialer und/oder lateraler Biegesteifigkeit durch entsprechend viele Speichen zu einem ähnlich steifen Laufrad wie eine Felge mit großer radialer und/oder lateraler Biegesteifigkeit mit wenigen Speichen gemacht werden. Es sei erwähnt, dass kleine Steifigkeit mit vielen Speichen für extrudierte Aluminiumfelgen einfacher umzusetzen ist, da nicht die großen Bauhöhen gepaart mit kleinen Wandstärken erreicht werden müssen. Schlussendlich muss die Größe der Felge ebenfalls berücksichtigt werden. Dies geschieht über Nenn- bzw. Schulterdurchmesser über den Felgen mit Felgenflanken generell definiert werden und entspricht 622 mm bei 28 und 29 Zoll sowie 584 mm bei 27,5 Zoll. In Anlehnung an das axiale Flächenträgheitsmoment fließt die Felgenhöhe H mit der dritten Potenz in die Berechnung ein und definiert somit die radiale Biegesteifigkeit der Felge. Dies ist die Hauptbelastungsrichtung jeder Felge mit Drahtspeichen. Die Felgenbreite B bzw. die laterale Biegesteifigkeit fließt mit der Potenz 1,5 in die Berechnung ein. Sie ist wichtiger als der Durchmesser aber weit weniger wichtig als die Felgenhöhe. Zusätzlich erhöht sie die umschlossene Fläche des Querschnitts und somit die Torsionssteifigkeit. Die Felgenmasse M ist wiederum ein essentieller Parameter und fließt mit der vierten Potenz in die Berechnung ein. Sie ist quasi das Gegenstück zum Produkt aus Felgenhöhe und Breite, was der allgemeinen Steifigkeit entspricht. Letztlich fließt die Anzahl der Speichen noch mit der Potenz 1,5 ein. Dieser Parameter ist einflussreicher als der Durchmesser und bildet das Gegenstück zur Felgenbreite.

Bevorzugt weist die Metalllegierung der erfindungsgemäßen Felge eine Aluminiumlegierung, eine Magnesiumlegierung, eine Titanlegierung oder eine Eisenbasislegierung auf.

Der LBF kann nur groß sein, wenn hohe Steifigkeiten (vorwiegend radial aber auch lateral) mit geringer Masse (geringe Wandstärken bzw. hohe Festigkeit) und wenigen Speichen vereint werden. Die Optimierung nur eines Parameters ist nicht zielführend.

Tabelle 3 beinhaltet Felgen für Drahtspeichenlaufräder für Mountainbikes mit den zugehörigen Parametern sowie dem errechneten LBF, wie sie dem aktuellen Stand der Technik entsprechen.

Tabelle 3 enthält ferner einen Auszug von Felgen für Mountainbikes auf Basis von Carbon und Aluminium, welche die gegenwärtige Speerspitze des Leichtbaus darstellen. Es ist eindeutig zu erkennen, dass sich die LBF's stark hinsichtlich der Materialität unterscheiden. So liegt der größte LBF bei Carbon bei 158 und bei Aluminium lediglich bei ca. 43, was die Überlegenheit von Carbon verdeutlicht. Der kleinste LBF für 622 mm bei Carbon liegt bei ca. 65,5 und ist somit immer noch ca. 53% größer als der größte LBF für 584 mm bei Aluminium mit 42,9. Bei gleicher Größe von 622 mm beträgt der Unterschied ca. 61%. Die großen LBF's bei Aluminium sind nur mit entsprechend großer Anzahl an Speichen erreichbar. Felgen aus Magnesiumlegierungen sind wieder vom Markt verschwunden. Felgen aus Titanlegierungen und Eisenbasislegierungen existieren scheinbar überhaupt nicht.

Es ist nach aktuellem Stand der Technik mit den herkömmlichen Fertigungsverfahren daher nicht möglich, eine Felge für Mountainbikes auf Metallbasis mit LBF-Werten von 50 oder größer bereitzustellen, da die erforderlichen kleinen Wandstärken gepaart mit festeren Materialien nicht herstellbar sind.

Die vorliegende Erfindung hat dieses Problem überwunden und ermöglicht nun überraschend die Herstellung einer Fahrradfelge für ein Mountainbike-Laufrad auf Basis von Drahtspeichen mit Felgendurchmesser 27,5" (584 mm) oder 29" (622 mm), die aus einer Metalllegierung besteht und es erlaubt, einen Leichtbaufaktor von mindestens 50, bevorzugt mindestens 65 und besonders bevorzugt mindestens 80 zu erreichen. Dabei bedient sich die Erfindung des metallischen 3D-Drucks.

Aluminium- und Magnesiumlegierungen können aktuell mit ca. 0,40 bis 0,50 mm Mindestwandstärke im 3D-Druck hergestellt werden. Titanlegierungen können ab ca. 0,30 mm und Eisenbasislegierungen sogar ab ca. 0,20 mm hergestellt werden. Erfindungsgemäß soll die minimale Wandstärke klein sein. Abhängig von der Materialdichte soll die Mindestwandstärke in mm kleiner gleich der Zahl 1,56 dividiert durch die Dichte in $g/cm^3$ sein. Entsprechend ergibt sich bei 6069 Aluminium ein Wert von 0,573 mm (= 1,56 / 2,72 $g/cm^3$), bei AZ61A Magnesium ein Wert von 0,867 mm (= 1,56 / 1,80 $g/cm^3$), bei TiAl6V4 ein Wert von lediglich 0,352 mm (= 1,56 / 4,43 $g/cm^3$) und bei 1.2709 der kleinste Wert mit 0,193 mm (= 1,56 / 8,1 $g/cm^3$).

Erforderliche spezifisch hochfeste Aluminiumlegierungen wie Scalmalloy von AP Works mit ca. 520 MPa Streckgrenze oder 7A77.60L von HRL Laboratories mit 585 MPa Streckgrenze sind verfügbar und erreichen spezifischen Streckgrenzen von größer 190 MPa/($g/cm^3$). Titanlegierung TA 15 und Eisenbasislegierung 1.2709 können sogar spezifische Streckgrenzen von mehr als 240 MPa/($g/cm^3$) erreichen.

Spezifisch hochsteife Legierungen wie A1000-RAM10 oder 2024-RAM10 sind ebenfalls für LPBF kommerziell verfügbar und erreichen spezifische Steifigkeiten von größer 32 GPa/($g/cm^3$). 2024-RAM10 erreicht zusätzlich eine spezifische Streckgrenze von größer 170 MPa/($g/cm^3$).

Analog zu den scheibengebremsten Felgen für Mountainbikes verhält es sich mit scheibengebremsten Felgen für Drahtspeichenlaufräder für Rennräder bzw. Gravel mit 28" (622 mm) Durchmesser. Tabelle 4 beinhaltet die Eigenschaften und errechneten LBF für diese Kategorie. Die zuvor genannten bevorzugten Merkmale sind hier ebenfalls gültig.

Tabelle 4 enthält einen Auszug von Felgen für Rennräder und Gravelbikes auf Basis von Carbon, Aluminium und Magnesium, welche die Speerspitze des Leichtbaus darstellen. Es ist eindeutig abzulesen, dass sich die LBF's wiederum stark hinsichtlich der Materialität unterscheiden. Die höheren maximalen LBF's im Vergleich zu den Felgen für Mountainbikes liegen in der Art der Verwendung begründet. Das Fahren über Stock und Stein sowie das Springen über Absätze verlangt tendenziell mehr Material bzw. Speichen bei Felgen für Mountainbikes. Zudem sind Durchschläge, Steinschläge oder Ähnliches beim Rennrad wesentlich unwahrscheinlicher und das spröde Carbon kann mit kleinerer Sicherheit verbaut werden. Der größte LBF desselben Herstellers liegt bei Carbon bei 279,1 und bei Aluminium lediglich bei 51,5, was wiederum die Überlegenheit von CFK verdeutlicht. Die Tabelle zeigt auch eindrücklich, dass eine sehr niedrige und leichte Felge mit vielen Speichen (American Classic Magnesium) und eine sehr hohe und schwere Felge (HUNT 34 Aero) einen ähnlich großen LBF erreichen. Der Einsatzzweck (agiles Beschleunigen am Berg vs. schnelles Fahren in der Ebene) ist jedoch komplett unterschiedlich. Den höchsten LBF bei Aluminium schafft die Argent Dics mit 63,7 fürs Hinterrad sowie 98,1 fürs Vorderrad. Dieselbe Felge wird einfach mit 18 statt 24 Löchern bzw. Speichen ausgestattet. Diese Konfiguration mit 18 Bohrungen ist ausschließlich für das Vorderrad zugelassen, wo die Lasten, speziell im Rennrad- und Gravelbereich, deutlich geringer als am Hinterrad sind. Felgen aus Titan- und Eisenbasislegierungen existieren scheinbar nicht.

Es ist nach aktuellem Stand der Technik mit den herkömmlichen Fertigungsverfahren daher nicht möglich, eine Felge für Rennrad- oder Gravelbikes auf Metallbasis mit LBF-Werten von mindestens 70 für das Hinterrad bzw. einen LBF von mindestens 105 für das Vorderrad bereitzustellen, da die erforderlichen kleine Wandstärken gepaart mit festeren Materialien nicht herstellbar sind.

Die vorliegende Erfindung hat dieses Problem überwunden und ermöglicht nun überraschend die Herstellung einer Fahrradfelge für ein Rennrad oder Gravelbike für ein Laufrad auf Basis von Drahtspeichen mit 28" (622 mm), die aus einer Metalllegierung besteht und es erlaubt einen Leichtbaufaktor von mindestens 70, bevorzugt mindestens 85 und besonders bevorzugt mindestens 100 für Hinterradfelgen und mindestens 105, bevorzugt mindestens 120 und besonders bevorzugt mindestens 135 für Vorderradfelgen zu erreichen. Dabei bedient sich die Erfindung des metallischen 3D-Drucks.

Mit Hilfe von LPBF (Laser Powder Bed Fusion) können sowohl die gekrümmte Felgengeometrie und die dünnen Wandstärken als auch die hochfesten Legierungen kombiniert werden.

Ein nachträgliches Biegen entfällt komplett, wodurch Legierungen, die nicht "biegbar" sind und über sehr hohe Streckgrenzen und oder geringe Bruchdehnungen verfügen, problemlos verwendet werden können.

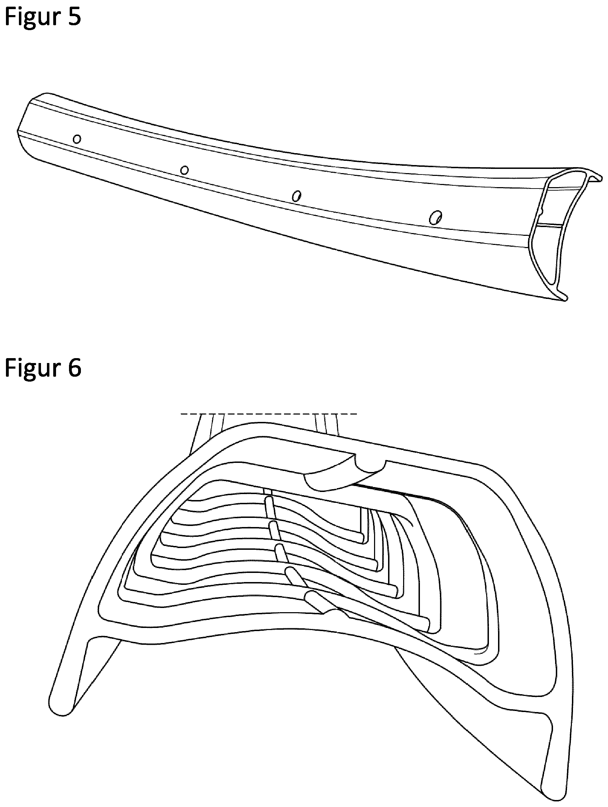

Die Machbarkeit wurde durch den Druck von Felgensegmenten im LPBF-Verfahren evaluiert und bestätigt. Figur 5 und Figur 6 schematische Skizzen basierend auf Fotografien des entsprechenden Prototyps mit 27,5 Zoll für Mountainbikes. Mit einer Höhe von 20 mm, einer Breite von 33,8 mm, einem Nenndurchmesser von 584 mm, 28 Speichen-Bohrungen und einer Masse von 47 Gramm pro Segment nach dem Gleitschleifen ergibt sich eine Felge, bestehend aus 7 verschweißten Segmenten, die einen LBF von ca. 53 aufweist. Durch Vergrößerung der Höhe und leichter Reduktion der Wandstärke, bspw. von aktuell 0,50 mm auf 0,45 mm, kann der LBF mit Leichtigkeit auf Werte größer 65 erhöht werden, allerdings steigen die Druckkosten pro Segment je mehr Volumen, sprich Höhe und Breite, pro Segment benötigt wird. Der Ansatz des Prototyps ist in diesem Fall hinsichtlich Kosten und LBF größer 50 optimiert. Einzelne Segmente wurden auf einer SLM 500 Quad Laser stehend gedruckt und mit Fasen versehen, um jegliches innenliegendes Stützmaterial zu vermeiden. Es wurden Versuche mit 4 x 400 Watt und 4 x 700 Watt Laserleistung mit jeweils 60 µm und 90 µm Lagendicke durchgeführt. Der stehende Aufbau und das in sich geschlossene Profil zeigen selbst bei 90 µm Schichtstärke und 700 Watt praktisch keinen Verzug. Die Dichte liegt bei mindestens 99 % und die Oberfläche kann effizient mittels Gleitschleifen geglättet werden, um entsprechende Dauerfestigkeit zu erzielen. Zudem ist es durch Segmentierung der Felge in z.B. 6, 7 oder 8 Segmente, die nachträglich mittels Laserschweißen gefügt werden, möglich, eine große Packungsdichte von bis zu 200 Stück pro Maschinendurchlauf auf einer SLM 500 und somit vergleichsweise niedrige Kosten, durch das kleine Volumen, zu erreichen.

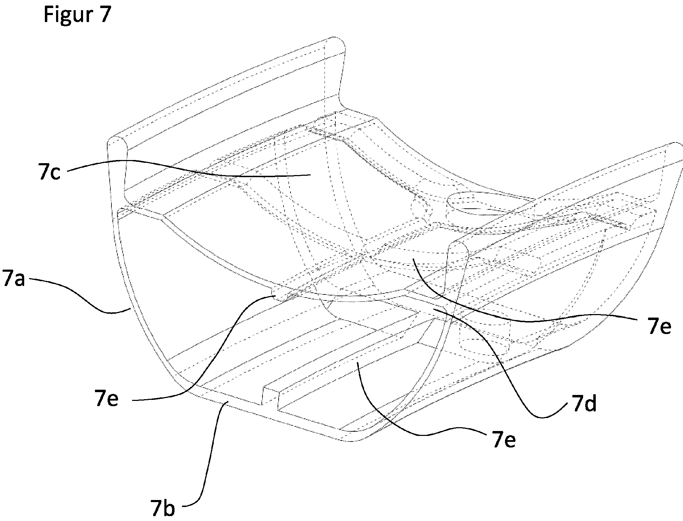

Figur 7 zeigt den entsprechenden inneren Aufbau des in Figur 5 und Figur 6 abgebildeten und mittels LBPF hergestellten Felgensegments mit der dünnwandigen Seitenwand 7a und dem dünnen Felgenboden 7b zwischen den Speichen sowie der dickwandigen Seitenwand 7c und dem dickwandigen Felgenboden 7d bei den Speichen-Positionen bzw. der Krafteinleitung. Zudem besteht die Möglichkeit des Einbringens von lokalen oder globalen Verstärkungsrippen 7e, welche bei den extrem dünnen Wandstärken ein Beulen verhindern sollen.

Neben dem gängigen und bekannten Verfahren des LPBF ermöglicht das am Fraunhofer ILT entwickelte EHLA (Extremes-Hochgeschwindigkeits-Laser-Auftragsschweißen) Verfahren ebenfalls, Felgen aus Pulver herzustellen. Die Firma Ponticon hat das Verfahren für rotationssymmetrische Bauteile mit bis zu 700 mm Durchmesser in ein EHLA 3D Konzept weiterentwickelt und kann so prinzipiell Felgen herstellen.

Dabei sind Mindestwandstärken von 0,35 mm möglich sowie prinzipiell alle Legierungen, die auch für LPBF eingesetzt werden.

Einen großen Vorteil bietet die Tatsache, dass kein Pulverbett, sondern lediglich eine Pulverdüse verwendet wird. Das Maschinenkonzept ermöglicht es, verschiedene Pulver aus mehreren Behältern variabel im Prozess zu mischen. So können MMC's mit variablem "Mischungsverhältnis", lokal verschiedene Legierungen oder jegliche Kombination, die sinnvoll erscheint, in einer Felge kombiniert werden.

Das neuartige Verfahren des Area Printing der Firma Seurat ist eine spezielle Variante des LPBF. Anstelle vieler einzelner Laser mit relativ wenig Leistung, die eine Spurbreite von einigen Zehn bis einigen Hundert µm verschmelzen können, werden Quadrate mit z.B. 15 x 15 mm gleichzeitig verschmolzen. Die Laserleistung ist sehr hoch mit aktuell 30 kW und wird noch steigen. Durch eine Maskierung des Laserlichts bestehen die Quadrate aus ca. 2.3 Millionen Pixel, wobei jedes Pixel belichtet (= verschmolzen) werden kann oder auch nicht. Minimale Wandstärken von ca. 100 - 150 µm bei Schichtstärken von lediglich ca. 25 µm werden als Verfahrensparameter genannt. Folglich sind dadurch erstmals sehr große Aufbauraten gepaart mit großer Genauigkeit vereint. Speziell hochfeste Materialien mit großer Dichte (z.B. der Werkstoff 1.2709) können durch die möglichen kleinen Wandstärken Einzug in den Leichtbau finden. Entsprechend können zukünftig Felgen oder Felgensegmente entsprechend der Erfindung nicht nur auf Basis von Aluminium-, Magnesium- oder Titanlegierungen, sondern auch Eisenbasislegierungen hergestellt werden.

Ferner kann im Rahmen der Erfindung auch Liquid Metal Printing (LMP) zum Einsatz kommen, wie es bspw. von der Firma GROB-WERKE GmbH & Co. KG angeboten wird, wobei die Schichtstärke mindestens 150 µm, bevorzugt mindestens 200 µm und besonders bevorzugt mindestens 250 µm beträgt und/oder die Tropfenfrequenz mindestens 300 Hz, bevorzugt mindestens 400 Hz und besonders bevorzugt mindestens 500 Hz beträgt.

**Tabelle 1**

| Nr. | Bauhöhe | Baubreite | Fläche | Wandstärke | Flächen-TH. | E-Modul | Biegesteifigkeit | Biegesteifigkeit | Dichte | Spez. Steifigkeit | Metergewicht | Metergewicht |
|---|---|---|---|---|---|---|---|---|---|---|---|---|
| | H in mm | B in mm | A in mm² | tinmm | ly in mm4 | E in kN/mm² | Sy in MNmm² | in % | g/cm³ | GPa/(g/cm³) | g/m | in % |
| Aluminiumlegierung / konstante Wandstärke | | | | | | | | | | | | |
| 1 | **20.00** | 30.00 | 77.44 | 0.80 | 5256.8 | 70 | 368.0 | **100.0** | 2.70 | 25.93 | 209.1 | **100.0** |
| 2 | **25.00** | 30.00 | 85.44 | 0.80 | 8738.6 | 70 | 611.7 | **166.2** | 2.70 | 25.93 | 230.7 | **110.3** |
| 3 | **30.00** | 30.00 | 93.44 | 0.80 | 13288.4 | 70 | 930.2 | **252.8** | 2.70 | 25.93 | 252.3 | **120.7** |
| Aluminiumlegierung / reduzierte Wandstärken | | | | | | | | | | | | |
| 4 | **25.00** | 30.00 | 50.29 | 0.47 | 5280.0 | 70 | 369.6 | **100.4** | 2.70 | 25.93 | 135.8 | **64.9** |
| 5 | **30.00** | 30.00 | 60.16 | 0.51 | 8722.3 | 70 | 610.6 | **165.9** | 2.70 | 25.93 | 162.4 | **77.7** |
| 6 | **35.00** | 30.00 | 69.66 | 0.55 | 13247.6 | 70 | 927.3 | **252.0** | 2.70 | 25.93 | 188.1 | **90.0** |
| Aluminiumlegierung / größerer Elastizitätsmodul | | | | | | | | | | | | |
| 7 | **22.60** | 30.00 | 81.60 | 0.80 | 6940.2 | **88** | 610.7 | **166.0** | 2.70 | 32.59 | 220.3 | **105.4** |
| 8 | **20.90** | 30.00 | 78.88 | 0.80 | 5809.2 | **105** | 610.0 | **165.8** | 2.70 | 38.89 | 213.0 | **101.9** |
| Quasi-Isotropes HT Carbon / konstante Wandstärke | | | | | | | | | | | | |
| 9 | **20.00** | 30.00 | 103.33 | 1.08 | 6827.4 | 54 | 368.7 | **100.2** | 1.55 | 34.84 | 160.2 | **76.6** |
| 10 | **25.00** | 30.00 | 114.13 | 1.08 | 11420.1 | 54 | 616.7 | **167.6** | 1.55 | 34.84 | 176.9 | **84.6** |
| 11 | **30.00** | 30.00 | 124.93 | 1.08 | 17439.4 | 54 | 941.7 | **255.9** | 1.55 | 34.84 | 193.6 | **92.6** |
| Quasi-Isotropes HT Carbon / reduzierte Wandstärke | | | | | | | | | | | | |
| 12 | **25.00** | 30.00 | 65.93 | 0.61 | 6842.5 | 54 | 369.5 | **100.4** | 1.55 | 34.84 | 102.2 | **48.9** |
| 13 | **30.00** | 30.00 | 78.83 | 0.67 | 11307.2 | 54 | 610.6 | **165.9** | 1.55 | 34.84 | 122.2 | **58.4** |
| 14 | **35.00** | 30.00 | 92.77 | 0.73 | 17452.5 | 54 | 942.4 | **256.1** | 1.55 | 34.84 | 143.8 | **68.8** |
| Aluminium / Magnesium / Titan | | | | | | | | | | | | |
| 15 | **25.00** | 30.00 | 50.29 | 0.47 | 5280.0 | 70 | 369.6 | **100.4** | 2.70 | 25.93 | 135.8 | **64.9** |
| 16 | **25.00** | 30.00 | 80.25 | 0.75 | 8240.0 | 45 | 370.8 | **100.8** | 1.80 | 25.00 | 144.5 | **69.1** |
| 17 | **25.00** | 30.00 | 30.81 | 0.28 | 3281.6 | 113 | 370.8 | **100.8** | 4.43 | 25.51 | 136.5 | **65.3** |

(fortgesetzt)

| | | | | | Metal Matrix Composite (Al oder Mg Basis) | | | | | | |
|----|-------|-------|-------|-----|--------|-----|-------|-------|------|-------|-------|------|
| 18 | **23.50** | 30.00 | 36.96 | 0.35 | 3505.2 | 105 | 368.0 | **100.0** | 2.84 | 36.97 | 105.0 | **50.2** |
| 19 | **27.60** | 30.00 | 47.68 | 0.42 | 5995.9 | 102 | 611.6 | **166.2** | 2.59 | 39.38 | 123.5 | **59.1** |
| 20 | **32.40** | 30.00 | 55.35 | 0.45 | 9235.1 | 102 | 942.0 | **256.0** | 2.59 | 39.38 | 143.4 | **68.6** |

## Tabelle 2

| Nr. | Bauhöhe / Hinmm | Baubreite / Binmm | Fläche / A in mm² | Wandstärke / t in mm | Flächen-TH. / ly in mm4 E in kN/mm² | E-Modul / in kN/mm² | Biegesteifigkeit / Sy in MNmm² | Biegesteifigkeit / in% | Dichte / g/cm³ | Spez. Steifigkeit / GPa/(g/cm³) | Metergewicht / g/m | Metergewicht / in% | Max. Biegespannung / MPa | Max. Biegespannung / in% |
|---|---|---|---|---|---|---|---|---|---|---|---|---|---|---|
| Aluminiumlegierung/konstante Wandstärke | | | | | | | | | | | | | | |
| 1 | 20.00 | 30.00 | 77.44 | 0.80 | 5256.8 | 70 | 368.0 | 100.0 | 2.70 | 25.93 | 209.1 | 100.0 | 380.5 | 100.0 |
| 2 | 25.00 | 30.00 | 85.44 | 0.80 | 8738.6 | 70 | 611.7 | 166.2 | 2.70 | 25.93 | 230.7 | 110.3 | 286.1 | 75.2 |
| 3 | 30.00 | 30.00 | 93.44 | 0.80 | 13288.4 | 70 | 930.2 | 252.8 | 2.70 | 25.93 | 252.3 | 120.7 | 225.8 | 59.3 |
| Aluminiumlegierung/reduzierte Wandstärken | | | | | | | | | | | | | | |
| 4 | 25.00 | 30.00 | 50.29 | 0.47 | 5280.0 | 70 | 369.6 | 100.4 | 2.70 | 25.93 | 135.8 | 64.9 | 473.5 | 124.4 |
| 5 | 30.00 | 30.00 | 60.16 | 0.51 | 8722.3 | 70 | 610.6 | 165.9 | 2.70 | 25.93 | 162.4 | 77.7 | 343.9 | 90.4 |
| 6 | 35.00 | 30.00 | 69.66 | 0.55 | 13247.6 | 70 | 927.3 | 252.0 | 2.70 | 25.93 | 188.1 | 90.0 | 264.2 | 69.4 |
| Metal Matrix Composite (Al oder Mg Basis) | | | | | | | | | | | | | | |
| 18 | 23.50 | 30.00 | 36.96 | 0.35 | 3505.2 | 105 | 368.0 | 100.0 | 2.84 | 36.97 | 105.0 | 50.2 | 670.4 | 176.2 |
| 19 | 27.60 | 30.00 | 47.68 | 0.42 | 5995.9 | 102 | 611.6 | 166.2 | 2.59 | 39.38 | 123.5 | 59.1 | 460.3 | 121.0 |
| 20 | 32.40 | 30.00 | 55.35 | 0.45 | 9235.1 | 102 | 942.0 | 256.0 | 2.59 | 39.38 | 143.4 | 68.6 | 350.8 | 92.2 |

**Tabelle 3**

| Bezeichnung | Höhe | Breite | Masse | Material | Durchmesser | Speichen | LBF |
|---|---|---|---|---|---|---|---|
| MCFK MTB (www.mcfk.de) | 29.0 | 35.0 | 335 | Carbon | 584 | 28 | 158.0 |
| MCFK MTB | 29.0 | 36.0 | 375 | Carbon | 622 | 28 | 111.8 |
| MCFK MTB | 29.0 | 44.0 | 395 | Carbon | 622 | 28 | 122.8 |
| BEAST XC25 MTB (https://beast-components.de/) | 25.0 | 30.4 | 330 | Carbon | 584 | 28 | 87.0 |
| BEAST XC25 MTB | 25.0 | 30.4 | 360 | Carbon | 622 | 28 | **65.5** |
| BEAST XS30 MTB | 20.0 | 35.7 | 315 | Carbon | 622 | 28 | 72.8 |
| ENVE M5 MTB (https://www.enve.com/) | 25.0 | 33.5 | 341 | Carbon | 584 | 24 | 111.3 |
| ENVE M5 MTB | 25.0 | 33.5 | 359 | Carbon | 622 | 24 | 96.5 |
| NEWMEN Evolution SL X.A.25 MTB (https://www.newmen-components.de/) | 18.0 | 28.0 | 375 | Aluminium | 584 | 28 | 17.2 |
| NEWMEN Evolution SL A.35 MTB | 22.5 | 38.0 | 525 | Aluminium | 584 | 28 | 13.8 |
| SYNTACE W40i (https://www.syntace.com/) | 22.0 | 44.0 | 575 | Aluminium | 584 | 28 | 11.2 |
| NOTUBES ZTR Crest MK4 MTB (https://www.notubes.com/) | 18.0 | 28.4 | 374 | Aluminium | 584 | 28 | 17.8 |
| American Classic MTB Race | 22.0 | 28.0 | 330 | Aluminium | 584 | 32 | **42.9** |
| American Classic MTB Race | 22.0 | 28.0 | 340 | Aluminium | 622 | 32 | 40.6 |
| DT SWISS XM551 MTB (https://www.dtswiss.com/de) | 21.0 | 44.0 | 595 | Aluminium | 584 | 28 | 8.5 |
| RACE FACE ARC 35 Offset (https://www.raceface.com/) | 20.0 | 38.5 | 525 | Aluminium | 584 | 28 | 9.9 |
| HUNT Mason X MTB (https://www.huntbikewheels.com/) | 19.0 | 29.0 | 400 | Aluminium | 584 | 28 | 16.5 |

**Tabelle 4**

| Bezeichnung | Höhe | Breite | Masse | Material | Größe | Speichen | LBF |
|---|---|---|---|---|---|---|---|
| HUNT 48 Limitless Aero Disc | 48.0 | 35.0 | 510 | Carbon | 622 | 20 | 235.4 |
| HUNT 50 Aero Disc | 50.0 | 27.0 | 427 | Carbon | 622 | 24 | 279.1 |
| MCFK Road Disc | 25.0 | 28.0 | 340 | Carbon | 622 | 24 | **91.6** |
| MCFK Gravel Disc | 45.0 | 31.0 | 425 | Carbon | 622 | 24 | 255.0 |
| ENVE SES 2.3 HR | 32.0 | 25.2 | 280 | Carbon | 622 | 24 | 356.8 |
| ENVE SES 2.3 VR | 28.0 | 25.2 | 275 | Carbon | 622 | 24 | 256.9 |
| American Classic Rennrad | 22.0 | 22.0 | 300 | Magnesium | 622 | 32 | 46.6 |
| HUNT 34 Aero | 34.0 | 26.0 | 515 | Aluminium | 622 | 20 | 51.5 |
| SYNTACE W25i | 21.0 | 29.0 | 480 | Aluminium | 622 | 24 | 14.4 |
| DUKE Road Runner 35 Disc (https://www.duke-racingwheels.com) | 35.0 | 24.3 | 529 | Aluminium | 622 | 24 | 34.7 |
| DT SWISS RR481 Disc | 25.0 | 26.0 | 455 | Aluminium | 622 | 24 | 25.6 |
| DUKE Road Runner 30 Disc | 30.0 | 23.0 | 471 | Aluminium | 622 | 24 | 32.0 |

(fortgesetzt)

| Bezeichnung | Höhe | Breite | Masse | Material | Größe | Speichen | LBF |
|---|---|---|---|---|---|---|---|
| American Classic Argent Disc HR | 30.0 | 22.0 | 390 | Aluminium | 622 | 24 | **63.7** |
| American Classic Argent Disc VR | 30.0 | 22.0 | 390 | Aluminium | 622 | 24 | **63.7** |

**Patentansprüche**

1. Mountainbike-Fahrradfelge für ein scheibengebremstes Drahtspeichenlaufrad mit Felgenflanken mit 27,5 Zoll (584 mm) oder 29 Zoll (622 mm) Nenndurchmesser, wobei diese als Hohlstruktur ausgeführt ist und aus einer Metalllegierung besteht und wobei der Leichtbaufaktor $LBF = (D \times H^3 \times B^{1,5}) / ((M^4 \times S^{1,5})/100.000)$ mindestens 50, bevorzugt mindestens 65 und besonders bevorzugt mindestens 80 beträgt, wobei D den Nenn- bzw. Schulterdurchmesser in mm bezeichnet, H die Felgenhöhe in mm bezeichnet, B die äußere Felgenbreite in mm bezeichnet, M die Masse in g bezeichnet und S die Anzahl der Speichen bezeichnet, und wobei die Mountainbike-Fahrradfelge mit einem der folgenden Verfahren hergestellt wurde: LPBF (Laser Powder Bed Fusion), Area Printing, EHLA (Extremes-Hochgeschwindigkeits-Laser-Auftragsschweißen) oder Liquid Metal Printing (LMP).

2. Rennrad- oder Gravel Fahrradfelge für ein scheibengebremstes Drahtspeichenlaufrad mit Felgenflanken mit 28 Zoll (622 mm) Nenndurchmesser, wobei diese als Hohlstruktur ausgeführt ist und aus einer Metalllegierung besteht und wobei der Leichtbaufaktor $LBF = (D \times H^3 \times B^{1,5}) / ((M^4 \times S^{1,5})/100.000)$ mindestens 70, bevorzugt mindestens 85 und besonders bevorzugt mindestens 100 beträgt, wobei D den Nenn- bzw. Schulterdurchmesser in mm bezeichnet, H die Felgenhöhe in mm bezeichnet, B die äußere Felgenbreite in mm bezeichnet, M die Masse in g bezeichnet und S die Anzahl der Speichen bezeichnet, und wobei die Rennrad- oder Gravel Fahrradfelge mit einem der folgenden Verfahren hergestellt wurde: LPBF (Laser Powder Bed Fusion), Area Printing, EHLA (Extremes-Hochgeschwindigkeits-Laser-Auftragsschweißen) oder Liquid Metal Printing (LMP).

3. Felge nach Anspruch 1 oder 2, wobei die minimale Wandstärke in mm kleiner gleich dem Quotienten aus der Zahl 1,56 dividiert durch die Legierungsdichte in $g/cm^3$ ist.

4. Felge nach einem der vorigen Ansprüche, wobei die Metalllegierung eine spezifische Streckgrenze von mindestens 180 $MPa/(g/cm^3)$, bevorzugt mindestens 205 $MPa/(g/cm^3)$ und besonders bevorzugt mindestens 230 $MPa/(g/cm^3)$ aufweist.

5. Felge nach einem der vorigen Ansprüche, wobei die Metalllegierung eine spezifische Streckgrenze von mindestens 170 $MPa/(g/cm^3)$ und eine spezifische Steifigkeit von mindestens 29 $GPa/(g/cm^3)$, bevorzugt mindestens 32 $GPa/(g/cm^3)$ und besonders bevorzugt mindestens 35 $GPa/(g/cm^3)$ aufweist.

6. Felge nach einem der vorigen Ansprüche, wobei die Metalllegierung einen Gehalt an keramischen Verstärkungspartikeln in Volumenprozent mindestens 10%, bevorzugt mindestens 15% und besonders bevorzugt mindestens 20% aufweist, wobei die keramischen Verstärkungspartikel bevorzugt eines oder eine Kombination der folgenden Materialien aufweisen: SiC, Al2O3, TiB2, TiC, B4C.

7. Felge nach einem der vorigen Ansprüche, wobei diese aus mindestens zwei unterschiedlichen Metalllegierungen mit gleichem oder unterschiedlichem Hauptlegierungselement besteht.

8. Felge nach einem der vorigen Ansprüche, wobei die Metalllegierung einen Gehalt an Verstärkungsphasen wie z.B. Carbon Nanotubes oder Graphen in Volumenprozent von mindestens 0,25% aufweist.

9. Felge nach einem der vorigen Ansprüche, wobei die Metalllegierung eine Aluminiumlegierung, eine Magnesiumlegierung, eine Titanlegierung oder eine Eisenbasislegierung ist.

10. Verfahren zur Herstellung einer Felge nach einem der vorigen Ansprüche, wobei das Verfahren LPBF (Laser Powder Bed Fusion), Area Printing, EHLA (Extremes-Hochgeschwindigkeits-Laser-Auftragsschweißen) oder Liquid Metal Printing (LMP) aufweist.

11. Verfahren nach Anspruch 10 unter Verwendung von LPBF, wobei die Schichtstärke mindestens 30 μm, bevorzugt

mindestens 60 $\mu$m und besonders bevorzugt mindestens 90 $\mu$m beträgt und die Laserleistung der Anlange mindestens 2,5 kW, bevorzugt mindestens 5 kW und besonders bevorzugt mindestens 8 kW beträgt, wobei die Leistung durch mindestens 3 Laser, bevorzugt mindestens 6 Laser und besonders bevorzugt mindestens 9 Laser bereitgestellt wird.

12. Verfahren nach Anspruch 10 unter Verwendung von Area Printing, wobei die Schichtstärke maximal 90 $\mu$m, bevorzugt maximal 60 $\mu$m und besonders bevorzugt maximal 30 $\mu$m beträgt und die Laserleistung der Anlange mindestens 25 kW, bevorzugt mindestens 50 kW und besonders bevorzugt mindestens 100 kW beträgt.

13. Verfahren nach Anspruch 10 unter Verwendung von EHLA , wobei die Schichtstärke mindestens 60 $\mu$m, bevorzugt mindestens 90 $\mu$m und besonders bevorzugt mindestens 120 $\mu$m beträgt und die Laserleistung der Anlange mindestens 5 kW beträgt.

14. Verfahren nach Anspruch 10 unter Verwendung von LMP, wobei die Schichtstärke mindestens 150 $\mu$m, bevorzugt mindestens 200 $\mu$m und besonders bevorzugt mindestens 250 $\mu$m beträgt und die Tropfenfrequenz mindestens 300 Hz, bevorzugt mindestens 400 Hz und besonders bevorzugt mindestens 500 Hz beträgt.

## Claims

1. Mountain bike rim for a disc-braked wire-spoked wheel with rim flanks having a nominal diameter of 27.5 inches (584 mm) or 29 inches (622 mm), wherein it is configured as a hollow structure and made of a metal alloy, and wherein the lightweight construction factor $LBF = (D \times H^3 \times B^{1.5}) / ((M^4 \times S^{1.5}) / 100{,}000)$ is at least 50, preferably at least 65, and particularly preferably at least 80, wherein D denotes the nominal or shoulder diameter in mm, H denotes the rim height in mm, B denotes the outer rim width in mm, M denotes the mass in g, and S denotes the number of spokes, and wherein the mountain bike rim is manufactured by one of the following methods: LPBF (Laser Powder Bed Fusion), Area Printing, EHLA (Extreme High-Speed Laser Deposition Welding), or Liquid Metal Printing (LMP).

2. Road bike or gravel bike rim for a disc-braked wire-spoked wheel with rim flanks having a nominal diameter of 28 inches (622 mm), wherein it is configured as a hollow structure and made of a metal alloy, and wherein the lightweight construction factor $LBF = (D \times H^3 \times B^{1.5}) / ((M^4 \times S^{1.5}) / 100{,}000)$ is at least 70, preferably at least 85, and particularly preferably at least 100, wherein D denotes the nominal or shoulder diameter in mm, H denotes the rim height in mm, B denotes the outer rim width in mm, M denotes the mass in g, and S denotes the number of spokes, and wherein the road bike or gravel bike rim is manufactured by one of the following methods: LPBF (Laser Powder Bed Fusion), Area Printing, EHLA (Extreme High-Speed Laser Deposition Welding), or Liquid Metal Printing (LMP).

3. Rim in accordance with claim 1 or 2, wherein the minimum wall thickness in mm is less than or equal to the quotient of the number 1.56 divided by the alloy density in $g/cm^3$.

4. Rim in accordance with one of the preceding claims, wherein the metal alloy comprises a specific yield strength of at least 180 $MPa/(g/cm^3)$, preferably at least 205 $MPa/(g/cm^3)$, and particularly preferably at least 230 $MPa/(g/cm^3)$.

5. Rim in accordance with one of the preceding claims, wherein the metal alloy comprises a specific yield strength of at least 170 $MPa/(g/cm^3)$ and a specific stiffness of at least 29 $GPa/(g/cm^3)$, preferably at least 32 $GPa/(g/cm^3)$, and particularly preferably at least 35 $GPa/(g/cm^3)$.

6. Rim in accordance with one of the preceding claims, wherein the metal alloy comprises ceramic reinforcing particles in a volume percentage of at least 10%, preferably at least 15%, and particularly preferably at least 20%, wherein the ceramic reinforcing particles preferably comprise one or a combination of the following materials: SiC, Al2O3, TiB2, TiC, B4C.

7. Rim in accordance with one of the preceding claims, wherein it consists of at least two different metal alloys with the same or different primary alloying elements.

8. Rim in accordance with one of the preceding claims, wherein the metal alloy comprises reinforcing phases such as carbon nanotubes or graphene in a volume percentage of at least 0.25%.

9. Rim in accordance with one of the preceding claims, wherein the metal alloy is an aluminum alloy, a magnesium alloy, a titanium alloy, or an iron-based alloy.

10. Method for manufacturing a rim in accordance with one of the preceding claims, wherein the method comprises LPBF (Laser Powder Bed Fusion), Area Printing, EHLA (Extreme High-Speed Laser Deposition Welding), or Liquid Metal Printing (LMP).

11. Method in accordance with claim 10 using LPBF, wherein the layer thickness is at least 30 $\mu$m, preferably at least 60 $\mu$m, and particularly preferably at least 90 $\mu$m, and the laser power of the system is at least 2.5 kW, preferably at least 5 kW, and particularly preferably at least 8 kW, wherein the power is provided by at least 3 lasers, preferably at least 6 lasers, and particularly preferably at least 9 lasers.

12. Method in accordance with claim 10 using Area Printing, wherein the layer thickness is at most 90 $\mu$m, preferably at most 60 $\mu$m, and particularly preferably at most 30 $\mu$m, and the laser power of the system is at least 25 kW, preferably at least 50 kW, and particularly preferably at least 100 kW.

13. Method in accordance with claim 10 using EHLA, wherein the layer thickness is at least 60 $\mu$m, preferably at least 90 $\mu$m, and particularly preferably at least 120 $\mu$m, and the laser power of the system is at least 5 kW.

14. Method in accordance with claim 10 using LMP, wherein the layer thickness is at least 150 $\mu$m, preferably at least 200 $\mu$m, and particularly preferably at least 250 $\mu$m, and the droplet frequency is at least 300 Hz, preferably at least 400 Hz, and particularly preferably at least 500 Hz.

## Revendications

1. Jante de vélo tout-terrain pour une roue à rayons métalliques freinée par un disque, avec des flancs de jante d'un diamètre nominal de 27,5 pouces (584 mm) ou 29 pouces (622 mm), celle-ci étant réalisée sous forme de structure creuse et étant constituée d'un alliage métallique, et le facteur de construction légère FCL = (D x H$^3$ x B$^{1,5}$) / ((M$^4$ x S$^{1,5}$)/100 000) étant d'au moins 50, de préférence d'au moins 65 et de manière particulièrement préférée d'au moins 80, où D désigne le diamètre nominal ou d'épaulement en mm, H désigne la hauteur de la jante en mm, B désigne la largeur extérieure de la jante en mm, M désigne la masse en g et S désigne le nombre de rayons, et où la jante de vélo tout-terrain est fabriquée par l'un des procédés suivants : LPBF (Laser Powder Bed Fusion), Area Printing, EHLA (soudage laser par dépôt à très haute vitesse) ou Liquid Metal Printing (LMP).

2. Jante de vélo de course ou de vélo gravel pour une roue à rayons métalliques freinée par un disque, avec des flancs de jante d'un diamètre nominal de 28 pouces (622 mm), celle-ci étant réalisée sous forme de structure creuse et étant constituée d'un alliage métallique et le facteur de construction légère FCL = (D x H$^3$ x B$^{1,5}$) / ((M$^4$ x S$^{1,5}$)/100 000) étant d'au moins 70, de préférence d'au moins 85 et de manière particulièrement préférée d'au moins 100, où D désigne le diamètre nominal ou d'épaulement en mm, H désigne la hauteur de la jante en mm, B désigne la largeur extérieure de la jante en mm, M désigne la masse en g et S désigne le nombre de rayons, et où la jante de vélo de course ou de vélo gravel est fabriquée par l'un des procédés suivants : LPBF (Laser Powder Bed Fusion), Area Printing, EHLA (soudage laser par dépôt à très haute vitesse) ou Liquid Metal Printing (LMP).

3. Jante selon la revendication 1 ou 2, dans laquelle l'épaisseur de paroi minimale en mm est inférieure ou égale au quotient du nombre 1,56 divisé par la densité de l'alliage en g/cm$^3$.

4. Jante selon l'une quelconque des revendications précédentes, dans laquelle l'alliage métallique présente une limite d'élasticité spécifique d'au moins 180 MPa/(g/cm$^3$), de préférence d'au moins 205 MPa/(g/cm$^3$) et de manière particulièrement préférée d'au moins 230 MPa/(g/cm$^3$).

5. Jante selon l'une quelconque des revendications précédentes, dans laquelle l'alliage métallique présente une limite d'élasticité spécifique d'au moins 170 MPa/(g/cm$^3$) et une rigidité spécifique d'au moins 29 GPa/(g/cm$^3$), de préférence d'au moins 32 GPa/(g/cm$^3$) et de manière particulièrement préférée d'au moins 35 GPa/(g/cm$^3$).

6. Jante selon l'une quelconque des revendications précédentes, dans laquelle l'alliage métallique présente une teneur en particules de renforcement céramiques, en pourcentage volumique, d'au moins 10%, de préférence d'au moins 15% et de manière particulièrement préférée d'au moins 20%, les particules de renforcement céramiques comprenant de préférence l'un des matériaux suivants ou une combinaison des matériaux suivants : SiC, Al2O3, TiB2, TiC, B4C.

7. Jante selon l'une quelconque des revendications précédentes, celle-ci étant constituée d'au moins deux alliages métalliques différents ayant un élément d'alliage principal identique ou différent.

8. Jante selon l'une quelconque des revendications précédentes, dans laquelle l'alliage métallique présente une teneur en phases de renforcement telles que des nanotubes de carbone ou du graphène, en pourcentage volumique, d'au moins 0,25 %.

9. Jante selon l'une quelconque des revendications précédentes, dans laquelle l'alliage métallique est un alliage d'aluminium, un alliage de magnésium, un alliage de titane ou un alliage à base de fer.

10. Procédé de fabrication d'une jante selon l'une quelconque des revendications précédentes, le procédé comprenant le LPBF (Laser Powder Bed Fusion), l'Area Printing, l'EHLA (soudage laser par dépôt à très haute vitesse) ou le Liquid Metal Printing (LMP).

11. Procédé selon la revendication 10 utilisant le LPBF, dans lequel l'épaisseur de couche est d'au moins 30 $\mu$m, de préférence d'au moins 60 $\mu$m et de manière particulièrement préférée d'au moins 90 $\mu$m et la puissance laser de l'installation est d'au moins 2,5 kW, de préférence d'au moins 5 kW et de manière particulièrement préférée d'au moins 8 kW, la puissance étant fournie par au moins 3 lasers, de préférence au moins 6 lasers et de manière particulièrement préférée au moins 9 lasers.

12. Procédé selon la revendication 10 utilisant l'Area Printing, dans lequel l'épaisseur de couche est de 90 $\mu$m au maximum, de préférence de 60 $\mu$m au maximum et de manière particulièrement préférée de 30 $\mu$m au maximum, et la puissance laser de l'installation est d'au moins 25 kW, de préférence d'au moins 50 kW et de manière particulièrement préférée d'au moins 100 kW.

13. Procédé selon la revendication 10 utilisant l'EHLA , dans lequel l'épaisseur de couche est d'au moins 60 $\mu$m, de préférence d'au moins 90 $\mu$m et de manière particulièrement préférée d'au moins 120 $\mu$m et la puissance laser de l'installation est d'au moins 5 kW.

14. Procédé selon la revendication 10 utilisant le LMP, dans lequel l'épaisseur de la couche est d'au moins 150 $\mu$m, de préférence d'au moins 200 $\mu$m et de manière particulièrement préférée d'au moins 250 $\mu$m, et la fréquence des gouttes est d'au moins 300 Hz, de préférence d'au moins 400 Hz et de manière particulièrement préférée d'au moins 500 Hz.

## Figur 1

## Figur 2

## Figur 3

3a

3b

## Figur 4

4a

4b

4c

Figur 5

Figur 6

Figur 7

7c

7a

7e

7e

7b

7e

7d

## Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007033719 A1
- DE 69508041 T2
- US 20160144660 A1
- DE 202020104486 U1
- DE 102015102465 B4
- DE 102008020257 A1
- DE 102009012999 A1
- DE 10217115246 B4
- DE 102010034500 A1
- DE 4208917 A1
- US 2008277996 A1